# EUROPEAN PATENT APPLICATION

(11) **EP 2 846 375 A2**
(43) Date of publication of application: **11.03.2015**
(21) Application number: 14184285.6
(22) Date of filing: 10.09.2014
(51) Int. Cl.: H01M 2/10, H01M 2/20, H01M 10/42

(54) **Battery pack**

(30) Priority: 10.09.2013 KR 20130108489
(71) Applicant: Samsung SDI Co., Ltd., Yongin-si, Gyeonggi-do (KR)
(72) Inventor: Gu, Eungyeong, Gyeonggi-do (KR)
(74) Representative: Mounteney, Simon James

(57) **Abstract**

A battery pack includes a plurality of bare cells, a first case portion covering one side of the bare cells, and a second case portion covering an opposite side of the bare cells and fastened to the first case portion. The first case portion may include fastening hooks formed on a sidewall of the first case portion, and the second case portion may include fastening grooves formed on a sidewall of the second case portion, the fastening grooves to be fastened to the fastening hooks, the fastening hooks including first fastening hooks protruding on a first region of the sidewall of the first case portion, the first fastening hooks being spaced apart from the plurality of bare cells in a first direction of the first case portion, the fastening hooks further including second fastening hooks protruding in a second direction opposite to the first direction, the first fastening hooks and the second fastening hooks being alternately arranged.

## Description

### BACKGROUND

### 1. Field

The invention relates to a battery pack.

### 2. Description of the Related Art

A battery pack may be used in a portable electronic device, such as a notebook computer, a personal digital assistant (PDA), a camcorder, and so on. The battery pack may be manufactured in a single body formed by grouping multiple bare cells.

A battery pack may be used in a high-capacity device having an increased number of bare cells, such as a garden tool, an e-bike, or the like.

Typically, the bare cells of a battery pack are contained within a case having case portions. The present invention seeks to improve the coupling between the case portions for reasons of impact resistance and safety.

### SUMMARY

Embodiments of the invention are directed to a battery pack, including a plurality of bare cells, a first case portion covering one side of the bare cells, and a second case portion covering an opposite side of the bare cells and fastened to the first case portion. The first case portion may include fastening hooks formed on a sidewall of the first case portion that is to be coupled to the second case portion, and the second case portion may include fastening grooves formed on a sidewall of the second case portion that is to be coupled to the first case portion, the fastening grooves to be fastened to the fastening hooks, the fastening hooks including first fastening hooks protruding on a first region of the sidewall of the first case portion, the first fastening hooks being spaced apart from the plurality of bare cells in a first direction of the first case portion, the fastening hooks further including second fastening hooks protruding in a second direction opposite to the first direction, the first fastening hooks and the second fastening hooks being alternately arranged.

The battery pack may further include a protection circuit module provided between the bare cells and the first case portion, the protection circuit module being electrically connected to the bare cells.

The first case portion may include a receiving part formed on another sidewall adjacent to sidewall having the first region.

The receiving part may include coupling parts formed at opposite sides of the receiving part, and the receiving part may further include at least one first barrier part protruding between the coupling parts toward the bare cells and having a stepped portion.

The battery pack may further include a separator part that separates the receiving part from the bare cells.

The receiving part may include a display module received therein, the display module being electrically connected to the protection circuit module.

The first case portion may include a terminal part formed on a sidewall opposite to the sidewall having the receiving part, the terminal part being configured to electrically connect the protection circuit module to an external device.

The terminal part may include at least one second barrier part protruding on the sidewall having the terminal part toward the bare cells.

The second barrier part may be formed in a smaller number than the first barrier part.

The first fastening hooks and the second fastening hooks may be sequentially formed only in the first region of the sidewall of the first case portion.

The first fastening hooks and the second fastening hooks may be sequentially formed on the overall sidewall of the first case portion having the first region.

The first fastening hooks and the second fastening hooks may be alternately formed from the first region of the sidewall of the first case portion, the first fastening hooks and the second fastening hooks projecting in the first direction and the second direction in that order.

The second fastening hooks and the first fastening hooks may be alternately formed from the first region of the sidewall of the first case portion, the first fastening hooks and the second fastening hooks projecting in the second direction and the first direction in that order.

The fastening grooves may include first fastening grooves and second fastening grooves formed in the second case portion, the first fastening grooves and the second fastening grooves being located to correspond to the first fastening hooks and the second fastening hooks, respectively, so as to be engaged with the first fastening hooks and the second fastening hooks, respectively.

The first fastening grooves and the second fastening grooves may be shaped to fit the first fastening hooks and the second fastening hooks, respectively.

The first fastening grooves and the second fastening grooves may have shapes corresponding to shapes of the first fastening hooks and the second fastening hooks, respectively, so as to allow both of the first fastening hooks and the second fastening hooks to be engaged therewith.

At least one electrode tab may be provided at one side of the bare cells to electrically connect adjacent ones of the bare cells to each other.

An insulation tape for protecting the electrode tab may be provided between the electrode tab and an electrode tab adjacent to the electrode tab or an inner sidewall of the case.

The bare cells may be cylindrical lithium ion batteries.

At least some of the above and other features of the invention are set out in the claims.

### BRIEF DESCRIPTION OF THE DRAWINGS

Features of the invention will be made apparent to those of skill in the art by describing in detail embodiments of the invention with reference to the attached drawings in which:
FIG. 1 is a perspective view illustrating a battery pack according to an embodiment of the present invention;
FIG. 2 is an exploded perspective view illustrating the battery pack shown in FIG. 1;
FIG. 3 illustrates a cross-sectional view taken along the line I-I of FIG. 1;
FIG. 4 is an enlarged view illustrating an 'A' portion of FIG. 3 in a state in which a fastening hook and a fastening groove have yet to be engaged with each other;
FIG. 5 is an enlarged view illustrating another embodiment of an 'A' portion of FIG. 4;
FIG. 6 is a perspective view illustrating first fastening hooks and second fastening hooks of a first case portion in the battery pack shown in FIG. 1;
FIG. 7 is a top view illustrating a first case portion in the battery pack shown in FIG. 1; and
FIG. 8 is an enlarged perspective view illustrating a state in which a first case portion and a second case portion of the battery pack shown in FIG. 1 are combined with each other.

### DETAILED DESCRIPTION

Example embodiments will now be described more fully hereinafter with reference to the accompanying drawings; however, the invention may be embodied in different forms and should not be construed as limited to the embodiments set forth herein. Rather, these embodiments are provided so that this disclosure will be thorough, and will fully convey suitable implementations to those skilled in the art.

In the drawing figures, the dimensions of layers and regions may be exaggerated for clarity of illustration. In addition, it will also be understood that when a layer is referred to as being "between" two layers, it can be the only layer between the two layers, or one or more intervening layers may also be present. Like reference numerals refer to like elements throughout.

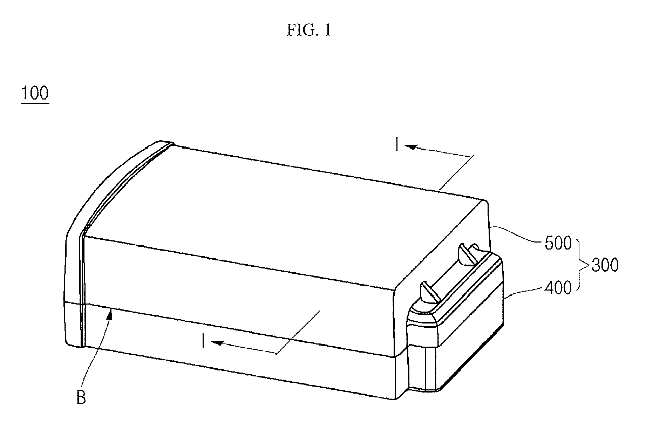

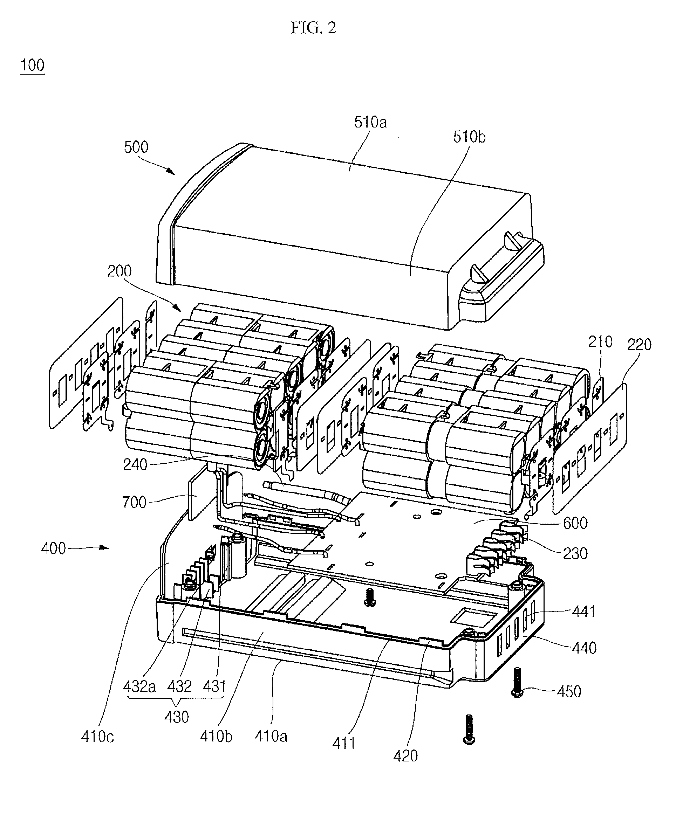

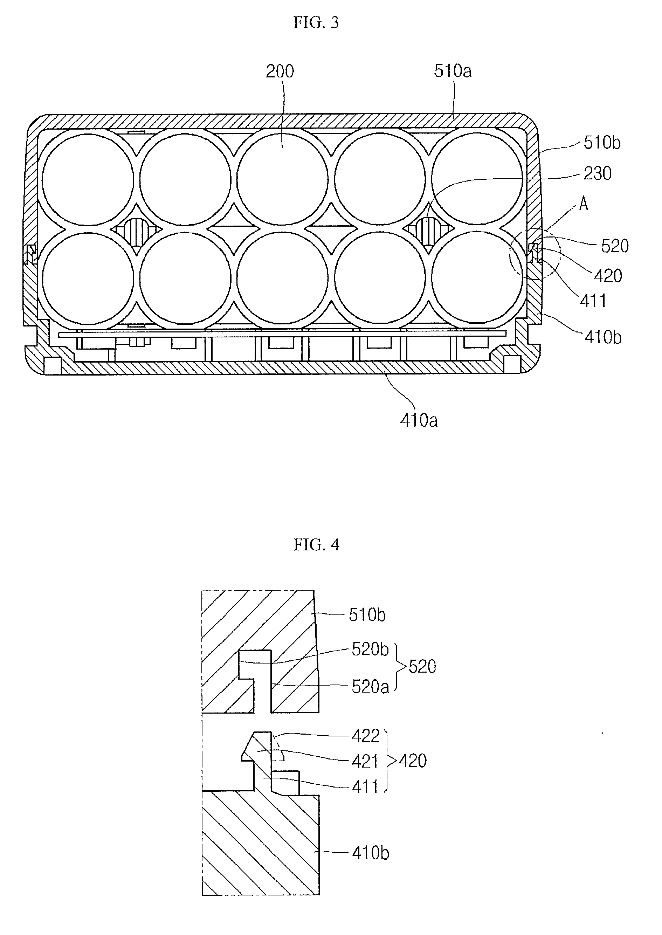

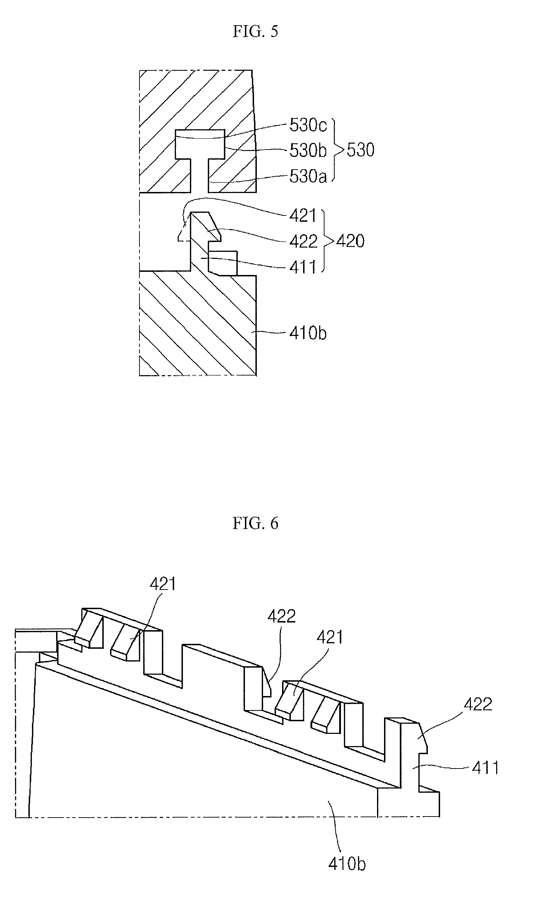

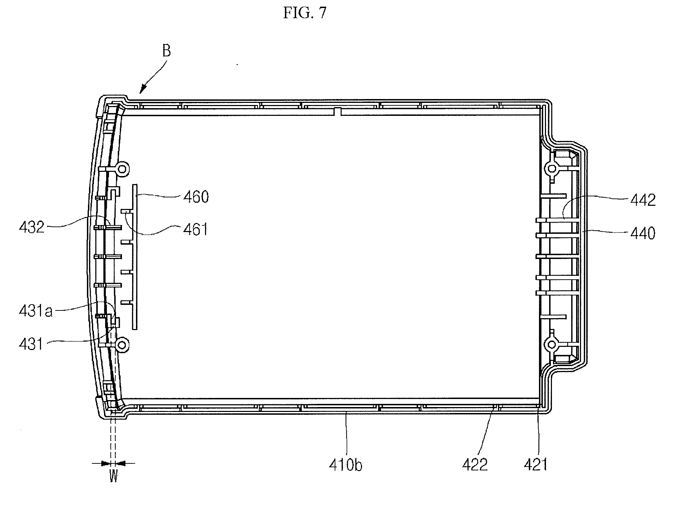

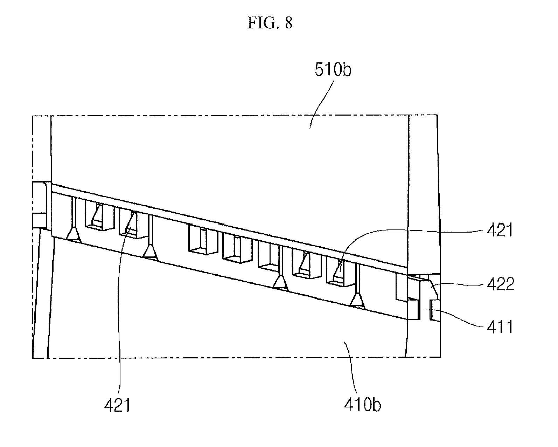

FIG. 1 is a perspective view illustrating a battery pack according to an embodiment of the present invention, FIG. 2 is an exploded perspective view illustrating the battery pack shown in FIG. 1, FIG. 3 is a cross-sectional view taken along the line I-I of FIG. 1, FIG. 4 is an enlarged view illustrating an 'A' portion of FIG. 3 in a state in which a fastening hook and a fastening groove have yet to be engaged with each other, FIG. 5 is an enlarged view illustrating another embodiment of an 'A' portion of FIG. 4, FIG. 6 is a perspective view illustrating first fastening hooks and second fastening hooks of a first case portion in the battery pack shown in FIG. 1, FIG. 7 is a top view illustrating a first case portion in the battery pack shown in FIG. 1, and FIG. 8 is an enlarged perspective view illustrating a state in which a first case portion and a second case portion of the battery pack shown in FIG. 1 are combined with each other.

Referring to FIGS. 1 to 3, a battery pack 100 according to an example embodiment may include a plurality of bare cells 200, a protection circuit module 600, and a case 300.

As the bare cells 200, rechargeable cylindrical secondary batteries or cylindrical secondary batteries may be used. In FIG. 2, the bare cells 200 including twenty bare cells are exemplified, but other numbers of bare cells 200 may be used.

Top and bottom surfaces of the bare cells 200 may have different polarities. The top surfaces of the bare cells 200 may correspond to positive electrodes, and the bottom surfaces of the bare cells 200 may correspond to negative electrodes. At least one electrode tab 210 may be provided at one side of the bare cells 200 to electrically connect adjacent ones of the bare cells 200.

An insulation tape 220 for protecting the electrode tab 210 may be provided between the electrode tab 210 and an electrode tab adjacent to the electrode tab 210 or an inner sidewall of the case 300.

The protection circuit module 600 may be provided between the bare cells 200 and the case 300, and may be electrically connected to the bare cells 200, e.g., through a plurality of wires 240. The protection circuit module 600 may include protection circuit devices (not shown) for controlling charging and discharging, and may control charging and discharging of the bare cells 200. The protection circuit module 600 may serve to prevent the bare cells 200 from being over-charged or over-discharged.

The protection circuit module 600 may include connectors 230. The connectors 230 may be positioned on a surface of the battery pack 100 facing the outside, and may be fitted into terminal holes 441 formed in a terminal part 440 of the case 300.

The terminal part 440 may include one or more barrier parts 442 (see FIG. 7) protruding from the sidewall having the terminal part 440 toward the bare cells 200. Adjacent ones of the terminal holes 441 may be separated from each other by the barrier parts 442. The number of the barrier parts 442 may be, e.g., six. In an example embodiment, the barrier parts 442 may be formed in a smaller number than barrier parts 432 protruding on a receiving part 430. The connectors 230 may serve as electrical paths to connect to an external electric device (not shown).

According to the present example embodiment, as shown in FIGS. 1 and 2, the case 300 includes a first case portion 400 and a second case portion 500. The case 300 includes the bare cells 200, the protection circuit module 600, and a display module 700.

The first case portion 400 may include a first bottom part 410a, a first sidewall 410b, fastening hooks 420, the receiving part 430, and the terminal part 440.

In the example embodiment shown in FIG. 7, the first case portion 400 is shaped of a box having an open top end to receive the bare cells 200. The terminal part 440 having a predetermined size protrudes at one side of the first case portion 400 to receive the connectors 230. As shown in FIG. 2, the bare cells 200, the protection circuit module 600, and the display module 700 may be placed in the first case portion 400.

The first bottom part 410a is a surface on which the plurality of bare cells 200 are placed, and may be formed to be planar. The first bottom part 410a may be approximately two times thicker than the first sidewall 410b for purposes of preventing deterioration in the external appearance and creation of sink mark defects.

The first sidewall 410b upwardly extends from an edge of the first bottom part 410a to enclose the plurality of bare cells 200. The first sidewall 410b includes a rib part 411 extending on a central portion of an upper side of the first sidewall 410b. The rib part 411 may have a smaller thickness than the first sidewall 410b.

According to the present example embodiment, the fastening hooks 420 upwardly extend from the central portion of the upper side of the first sidewall 410b, and ends of the fastening hooks 420 protrude in a first direction or in a second direction opposite to the first direction of the first case portion 400. For example, the fastening hooks 420 may protrude from the upper side of the rib part 411 to the inside or outside of the first case portion 400. The fastening hooks 420 are fastened to the fastening grooves 520 of the second case portion 500 to combine the first case portion 400 and the second case portion 500 with each other.

According to the present example embodiment, as shown in FIGS. 4 to 6, the fastening hooks 420 include first fastening hooks 421 and second fastening hooks 422.

The first fastening hooks 421 may protrude to the inside of the first case portion 400 (that is, in the first direction). The first fastening hooks 421 may be configured to have increasing heights from a top portion of the rib part 411. For example, the first fastening hooks 421, each having a vertical cross section shaped of a right triangle, may inwardly protrude to be easily engaged with the fastening grooves 520 of the second case portion 500. Once the first fastening hooks 421 are engaged with the fastening grooves 520, they may not be readily disengaged from the fastening grooves 520. In addition, a thickness of the thickest part of the first fastening hook 421 may be greater than a thickness of the rib part 411.

The second fastening hooks 422 may protrude to the outside of the first case portion 400 (that is, in the second direction). The second fastening hooks 422 may be configured to have increasing heights from the top portion of the rib part 411. For example, the second fastening hooks 422, each having a vertical cross section shaped of a right triangle, may outwardly protrude (which is opposite to the direction in which the first fastening hooks 421 protrude) to be easily engaged with the fastening grooves 520 of the second case portion 500. Once the second fastening hooks 422 are engaged with the fastening grooves 520, they may not be readily disengaged from the fastening grooves 520. In addition, a thickness of the thickest part of the second fastening hook 422 may be greater than the thickness of the rib part 411.

The first fastening hooks 421 and the second fastening hooks 422 may be sequentially arranged on a first region B of the first sidewall 410b, spaced apart from the bare cells 200, to alternate each other. The first region B is a region where the receiving part 430 of the first case portion 400 is formed.

The first fastening hooks 421 and the second fastening hooks 422 may be arranged in groups of, e.g., 2 or 4 hooks, and may be spaced apart from each other. In addition, numbers of the first fastening hooks 421 and the second fastening hooks 422 may vary according to the number of the bare cells 200 and the size of the case 300. In addition, the numbers and shapes of the first fastening hooks 421 and the second fastening hooks 422 may also vary according to the size and design of the first case portion 400. In the present example embodiment, the first fastening hooks 421 and the second fastening hooks 422 are alternately arranged on the first sidewall 410b in the first region B having the receiving part 430. When the first case portion 400 and the second case portion 500 are combined with each other, the first fastening hooks 421 and the second fastening hooks 422 are fixed to the fastening grooves 520 of the second case portion 500 in opposite directions in the first region B, where the first case portion 400 and the second case portion 500 are combined with each other with a relatively weak coupling force, which may improve the coupling force of the first case portion 400 and the second case portion 500 in the first region B.

In addition, the first fastening hooks 421 and the second fastening hooks 422 may be sequentially formed on the overall first sidewall 410b having the first region. In the present example embodiment, the first fastening hooks 421 and the second fastening hooks 422 are alternately arranged on the overall first sidewall 410b to combine the first case portion 400 with the second case portion 50. In such a case, the first fastening hooks 421 and the second fastening hooks 422 are fixed to the fastening grooves 520 of the second case portion 500, which may improve the coupling force of the first case portion 400 and the second case portion 500.

In addition, the first fastening hooks 421 and the second fastening hooks 422 may be alternately formed from the first region B of the first sidewall 410b in the first direction and the second direction in that order. In another implementation, the second fastening hooks 422 and the second fastening hooks 421 may be alternately formed from the first region B of the first sidewall 410b in the second direction and the first direction in that order.

According to the present example embodiment, the receiving part 430 is formed on the other sidewall adjacent to the first region B on the first sidewall 410b in the first case portion 400. The receiving part 430 may be formed to have a predetermined receiving space on one sidewall of the first case portion 400. The receiving part 430 may be separated from the bare cells 200 through a separator part 460. The separator part 460 may be a separating barrier formed to be parallel with the display module 700, and a plurality of support barriers 461 vertically supporting the display module 700 may be formed on the separator part 460.

The receiving part 430, including the coupling parts 431 and the barrier parts 432, may form a receiving space.

Each of the coupling parts 431 may be formed in a "U" shape to have both sides facing each other. The display module 700 may be inserted into an inside 431a between the both sides of the "U" shaped coupling part 431 in an interference fit manner. A width W of the inside 431a of the "U" shaped coupling part 431 may be equal to or smaller than a width of the display module 700.

The barrier parts 432 may be plurally provided and may protrude between the coupling parts 431 toward the bare cells 200 from a sidewall 410c opposite to the terminal part 440. Substantially "L" shaped stepped portions 432a may be formed at lower regions of the barrier parts 432, and the display module 700 may be fitted into the coupling part 431 and fixed in parallel to a top surface of a region having the stepped portions 432a.

The display module 700 may be inserted into the receiving part 430 formed on one sidewall of the first case portion 400 in an interference fit manner. The display module 700 may be electrically connected to the protection circuit module 600 and may externally display, e.g., the number, capacity, or charged or discharged states of the bare cells 200.

Even if the first case portion 400 connected with the display module 700 is combined with the second case portion 500, the coupling force between the first case portion 400 and the second case portion 500 may be weakened by external impacts due to spaces between one sidewall of each of the first case portion 400 and the second case portion 500 and the bare cells 200, thereby allowing the first case portion 400 and the second case portion 500 to be easily disengaged from each other. In the present example embodiment, the first fastening hooks 421 and the second fastening hooks 422, which are alternately formed on the first region B adjacent to the one sidewall of the first case portion 400 connected with the display module 700, are engaged with the fastening grooves 520 formed in the second case portion 500, which may improve the coupling force of the case 300 and improve stability against external impacts.

The terminal part 440 may protrude on the sidewall opposite to the sidewall having the receiving part 430. The terminal part 440 may have a plurality of terminal holes 441 formed therein, the terminal holes 441 spaced a predetermined distance apart from each other and passing through the terminal part 440 terminal part 440. A plurality of connectors 230 may be fitted into the terminal holes 441, such that one side of each of the terminal holes 441 is electrically connected to the protection circuit module 600 and the other side of each of the terminal holes 441 is electrically connected to a terminal of an external device.

According to the present example embodiment, the second case portion 500 includes a second top part 510a, a second sidewall 510b, and fastening grooves 520.

The second case portion 500 may be shaped as a box having an open bottom end to receive the plurality of bare cells 200. The second case portion 500 may be sized to fit the first case portion 400 and may cover the first case portion 400.

The second sidewall 510b extends from edges of the second top part 510a.

The fastening grooves 520 are formed on the second sidewall 510b to be located to fit the fastening hooks 420 of the rib 411. Since the fastening grooves 520 are located to fit the fastening hooks 420 of the rib 411, they are engaged with the fastening hooks 420. Since the fastening grooves 520 are engaged with the fastening hooks 420 of the first case portion 400, the first case portion 400 and the second case portion 500 are combined with each other. The number of the fastening grooves 520 may be equivalent to that of the fastening hooks 420 of the first case portion 400.

According to the present example embodiment, the fastening grooves 520 are formed on the second sidewall 510b to be located to fit the first fastening hooks 421 and the second fastening hooks 422 formed on the rib 411, and are engaged with the first fastening hooks 421 and the second fastening hooks 422. Thus, the fastening grooves 520 are located to fit the first region B having the first fastening hooks 421 and the second fastening hooks 422.

As shown in FIG. 4, the fastening grooves 520 may be shaped to fit the first fastening hooks 421 and the second fastening hooks 422. Thus, each of the fastening grooves 520 may have a central region 520a of the second sidewall 510b and a groove 520b formed into the inside of the second case portion 500 to be engaged with the first fastening hooks 421 protruding to the inside of the first case portion 400. In addition, each of the fastening grooves 520 may have a central region 520a of the second sidewall 510b and a groove (not shown) formed into the outside of the second case portion 500 to be engaged with the second fastening hooks 422 protruding to the outside of the first case portion 400. In the present example embodiment, the grooves 520b engaged with the first fastening hooks 421 and the grooves engaged with the second fastening hooks 422 are alternately arranged.

In another implementation of the fastening grooves 520, as shown in FIG. 5, fastening grooves 530 may be shaped to allow both of the first fastening hooks 421 and the second fastening hooks 422 to be engaged therewith. Thus, each of the fastening grooves 520 may include a central region 530a of the second sidewall 510b and a groove formed to both of an inside 530c and an outside 530c of the second case portion 500 to accommodate all of the rib 411, the first fastening hooks 421 protruding to the inside of the first case portion 400, and the second fastening hooks 422 protruding to the outside of the first case portion 400.

The combining of the first case portion 400 with the second case portion 500 will now be described in detail with reference to FIGS. 4, 5, and 7.

The combining of the first case portion 400 with the second case portion 500 may be achieved by engagement based on locking structures of the fastening hooks 420 and the fastening grooves 520. In the first case portion 400, the first fastening hooks 421 and the second fastening hooks 422 protruding to the inside and the outside may be inserted into the fastening grooves 520. The first fastening hooks 421 and the second fastening hooks 422 are engaged with the fastening grooves 520. Since the first fastening hooks 421 and the second fastening hooks 422 of the first case portion 400 are engaged with the fastening grooves 520 of the second case portion 500, the first case portion 400 and the second case portion 500 are combined with each other.

In a case where the first fastening hooks 421 and the second fastening hooks 422 are formed only in the first region B of the first case portion 400, the first fastening hooks 421 and the second fastening hooks 422 may be engaged with the fastening grooves 520 in opposite directions in the first region B, where the first case portion 400 and the second case portion 500 are combined with each other with a relatively weak coupling force, which may increase the coupling force between the first case portion 400 and the second case portion 500.

In addition, in a case where the first fastening hooks 421 and the second fastening hooks 422 are formed on the overall region of the first sidewall 410b of the first case portion 400, they may be engaged with the fastening grooves 520 in opposite directions on the overall region of the first sidewall 410b of the first case portion 400, which may increase the coupling force between the first and second fastening hooks 421 and 422 and the fastening grooves 520.

As described above, in the battery pack 100 according to an example embodiment, the first fastening hooks 421 and the second fastening hooks 422 protruding in opposite directions are formed on the first sidewall 410b of the first case portion 400 to be engaged with the fastening grooves 520 in opposite directions, which may increase the coupling force between the first case portion 400 and the second case portion 500.

Accordingly, the fastening hooks of the first case portion 400 and the fastening grooves 520 of the second case portion 500 may be engaged with each other with increased coupling forces without deterioration in the external appearance quality. Therefore, even if external impacts are applied to the battery pack 100, the first case portion 400 and the second case portion 500 may not be readily separated from each other.

In order to improve the coupling force between the first case portion 400 and the second case portion 500, a plurality of fasteners 450 may be additionally provided.

By way of summation and review, a battery pack may include a first case portion having a plurality of fastening hooks formed along its periphery, a second case portion having a plurality of fastening grooves located to correspond to the fastening hooks of the first case portion, and a plurality of bare cells received in a space formed by the first case portion and the second case portion. Due to the increasing weight of the high-capacity battery pack from increasing the number of bare cells, increasing the coupling force between cases of the battery pack may be important. In a general battery pack in which fastening hooks are arranged in only one direction, when fastening hooks of the first case portion are engaged with fastening grooves of the second case portion, the coupling force may be reduced when an impact is applied to the battery pack.

As described above, embodiments of the invention are directed to a battery pack that may have an improved coupling force. The battery pack according to an example embodiment may have an improved coupling force in a coupled portion of a case by forming hooks in opposite directions, compared to a case having hooks formed in only one direction.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a plurality of bare cells;
a first case portion covering one side of the bare cells; and
a second case portion covering an opposite side of the bare cells and fastened to the first case portion, wherein the first case portion includes fastening hooks formed on a sidewall of thereof that is to be coupled to the second case portion, and the second case portion includes fastening grooves formed on a sidewall thereof that is to be coupled to the first case portion, the fastening grooves to be fastened to the fastening hooks, the fastening hooks including first fastening hooks protruding on a first region of the sidewall of the first case portion, the first fastening hooks being spaced apart from the plurality of bare cells in a first direction of the first case portion, the fastening hooks further including second fastening hooks protruding in a second direction opposite to the first direction, the first fastening hooks and the second fastening hooks being alternately arranged.

2. A battery pack as claimed in claim 1, further comprising a protection circuit module provided between the bare cells and the first case portion, the protection circuit module being electrically connected to the bare cells.

3. A battery pack as claimed in claim 2, wherein the first case portion includes a receiving part formed on another sidewall adjacent to sidewall having the first region.

4. A battery pack as claimed in claim 3, wherein the receiving part includes coupling parts formed at opposite sides of the receiving part, the receiving part further including at least one first barrier part protruding between the coupling parts toward the bare cells and having a stepped portion.

5. A battery pack as claimed in claim 3 or 4, further comprising a separator part that separates the receiving part from the bare cells.

6. A battery pack as claimed in claim 3, 4 or 5, wherein the receiving part includes a display module received therein, the display module being electrically connected to the protection circuit module.

7. A battery pack as claimed in claim 4, 5 or 6 wherein the first case portion includes a terminal part formed on a sidewall opposite to the sidewall having the receiving part, the terminal part being configured to electrically connect the protection circuit module to an external device.

8. A battery pack as claimed in claim 7, wherein the terminal part includes at least one second barrier part protruding on the sidewall having the terminal part toward the bare cells.

9. A battery pack as claimed in claim 8, wherein the second barrier part is formed in a smaller number than the first barrier part.

10. A battery pack as claimed in any preceding claim, wherein the first fastening hooks and the second fastening hooks are formed only in the first region of the sidewall of the first case portion.

11. A battery pack as claimed in any one of claims 1 to 9, wherein the first fastening hooks and the second fastening hooks are formed on the overall sidewall of the first case portion having the first region.

12. A battery pack as claimed in claim 1, wherein the first fastening hooks and the second fastening hooks are alternately formed from the first region of the sidewall of the first case portion, the first fastening hooks and the second fastening hooks projecting in the first direction and the second direction in that order.

13. A battery pack as claimed in claim 1, wherein the second fastening hooks and the first fastening hooks are alternately formed from the first region of the sidewall of the first case portion, the first fastening hooks and the second fastening hooks projecting in the second direction and the first direction in that order.

14. A battery pack as claimed in any preceding claim, wherein the fastening grooves include first fastening grooves and second fastening grooves formed in the second case portion, the first fastening grooves and the second fastening grooves being located to correspond to the first fastening hooks and the second fastening hooks, respectively, so as to be engaged with the first fastening hooks and the second fastening hooks, respectively.

15. A battery pack as claimed in claim 14, wherein the first fastening grooves and the second fastening grooves are shaped to fit the first fastening hooks and the second fastening hooks, respectively.

16. A battery pack as claimed in claim 14, wherein the first fastening grooves and the second fastening grooves each have shapes corresponding to shapes of both the first fastening hooks and the second fastening hooks, so as to allow either of the first fastening hooks and the second fastening hooks to be engaged therewith.
